# EUROPEAN PATENT APPLICATION

(11) **EP 4 439 147 A1**
(43) Date of publication of application: **02.10.2024**
(21) Application number: 23164758.7
(22) Date of filing: 28.03.2023
(51) Int. Cl.: G02B 21/24

(54) **COMPUTER-IMPLEMENTED METHODS FOR MANUAL FOCUS ADJUSTMENT OF A MICROSCOPE AND MICROSCOPES WITH MANUAL FOCUS ADJUSTMENT**

(71) Applicant: Leica Microsystems CMS GmbH, 35578 Wetzlar (DE)
(72) Inventor: Tille, Sebastian, 35578 Wetzlar (DE)
(74) Representative: Paustian & Partner Patentanwälte mbB

(57) **Abstract**

Disclosed is a computer-implemented method for manual focus adjustment of a microscope, with the steps:
- obtaining information about a manually adjusted focus relative to a sample in a microscope;
- determining information about a proposed focus for the sample;
- determining a difference between the adjusted focus and the proposed focus;
- providing information about a signal to a user based on the determined difference.

## Description

### Technical field

Embodiments in this disclosure relate to computer-implemented methods for manual focus adjustment of a microscope and microscopes with a manually adjustable focus.

### Background

Microscope systems with manual focus adjustment usually require the user to select a focus to view a microscopic image captured by the system's camera or objective and displayed on the system's screen or eyepiece. The user must consciously adjust the focus position, e.g., with a mechanical focus knob. Users of such microscope systems report difficulty focusing or finding an appropriate focus after placing a specimen/sample on the microscope. This is because the microscope system optics may be focusing on a plane that is (significantly) above or below a useful focal plane within the specimen/sample. As a result, the displayed image is low in contrast and structures are not clearly visible. It is solely up to the user then to obtain a satisfactory image. Improvements in these areas are desirable.

### Summary

An objective of the embodiments disclosed herein is to improve an operation of a microscope with manual focus adjustment.

This problem is solved by the disclosed embodiments, which are in particular defined by the subject matter of the independent claims. The dependent claims provide further embodiments. In the following, different aspects and embodiments of these aspects are disclosed, which provide additional features and advantages.

A first aspect relates to a computer-implemented method for manual focus adjustment of a microscope, with the steps:
- obtaining information about a manually adjusted focus relative to a sample in a microscope;
- determining information about a proposed focus for the sample;
- determining a difference between the adjusted focus and the proposed focus;
- providing information about a signal to a user based on the determined difference.

A microscope with manual focus adjustment can be any type of device used to examine objects that are difficult to be seen by the naked eye and wherein a focus is, at least partly, adjusted manually, e.g. by hand. Examples of microscopes can be widefield or brightfield microscopes, transmitted light microscopes, reflected light microscopes, phase contrast microscopes, etc. A microscope can also be a macroscope or a stereoscope.

The step of obtaining information can comprise receiving or fetching the information from the microscope or from a device connected to the microscope, e.g. a shared memory.

An adjusted focus relates to a focus adjusted by a user of the microscope. A manual adjustment can be performed mechanically or digitally. For example, a focus adjustment can be controlled by a mechanical focus knob, by a push button, by a computer mouse, by a touch-input-device, by a gesture recognition, etc.

A sample can be of any sample type that can be examined by a microscope. A sample in the microscope can be an organic or an inorganic sample. Additionally or alternatively, the sample can comprise any other elements or molecules. For example, the sample can be a tissue or made of another material, e.g., plastic. The sample can be opaque or transparent or any state in between.

The step of determining information about a proposed focus for the sample can be an automatic or a semi-automatic step. This will be explained in relation to the different embodiments and figures later. A proposed focus can be based on the sample, on the adjusted focus, or can be based on a pre-defined value. This will also be explained in relation to the different embodiments and figures.

The step of providing information about a signal to a user can be directed to the microscope itself or to a device that interacts with the microscope. The step is related to providing information for generating, by a hardware, a signal to a user. For example, after having obtained the information about a user-signal, the signal can be realized by a display connected to the microscope or by the microscope itself.

Advantageously, by a computer-implemented method for manual focus adjustment of a microscope as explained above, a user guidance for such microscopes can be provided and/or improved.

Additionally to a provision of information about a signal to a user, the method can provide to the user the signal itself.

Instead of a microscope, the embodiments in this disclosure can also be related to other optical devices, e.g., a photo camera, a spotting scope, or a telescope. In this case the object to be observed might not be a sample as described above, but another object. The features described in relation to a microscope and to samples also hold for other devices and other objects to be observed.

An embodiment of the first aspect relates to a computer-implemented method for manual focus adjustment of a microscope, wherein the information about the signal is updated:
- constantly; or
- if the manually adjusted focus changes.

A constant update can be based on hard or soft real-time requirements. For example, in case of hard real-time conditions the information about the signal will be updated with highest priority after a pre-defined interval. In case of soft real-time conditions the information can be updated after a pre-defined interval, but with less priority. Hence, when the system that runs the method is occupied with other tasks, an update for the information about the signal is conducted after a pre-defined time interval, but only if enough system resources are available.

Advantageously, a constant update of the information about the user signal can provide simple implementation of accurate feedback about the difference between an adjusted focus and a proposed focus.

An update of the information about the user signal can also be conducted event-based. This can be done, for example if new information about a manually adjusted focus is obtained. Afterwards, a new difference between the newly adjusted focus and an proposed focus can be determined and the signal information for the user can be updated.

Advantageously, new information about the user signal will only be provided if new information about an adjusted focus has been obtained. In case of a mechanical focus knob, new information about a user signal is only provided if the user has adjusted the focus by turning the mechanical focus knob.

An embodiment of the first aspect relates to a computer-implemented method for manual focus adjustment of a microscope, wherein the proposed focus is based on the adjusted focus.

A proposed focus can be determined based on pre-defined structures of a sample, e.g., a proposed focus can be selected as the focus with a maximum contrast level and/or as the focus with a pre-defined contrast level, in particular based on the information of the adjusted focus. A contrast can relate to an amplitude contrast and/or a phase contrast.

Based on an adjusted focus, a proposed focus can also be defined based on statistical and/or machine learning methods. For example, based on a visual analysis of the sample a trained machine learning algorithm can be applied that determines a proposed focus automatically based the information obtained by the adjusted focus.

Additionally or alternatively, a proposed focus can be determined as a focal plane located at the center of a sample. The center of the sample can be determined as half the distance at which the optical axis crosses the sample. The thickness of a sample at the optical axis, i.e., the full distance at which the optical axis intersects the sample, may be determined automatically, e.g., based on visual analysis of the information obtained from the adjusted focus, or manually, e.g., by an input from the user.

Advantageously, the proposed focus for a particular sample can be accurately calculated, especially based on prior knowledge of the sample or the type of sample to which the particular sample can be assigned. The latter can be inferred from the adjusted focus.

An embodiment of the first aspect relates to a computer-implemented method for manual focus adjustment of a microscope, wherein the proposed focus is based on a pre-defined focus.

A proposed focus can be determined based on prior calculations and/or priorly evaluated models. Therefore, in particular some information about the sample or about an external condition can be considered. For example, a pre-defined focus can be determined based on one or more of the following parameters of the sample: material, volume, geometric conditions, phase contrast, illumination of the sample. All these parameters can be inferred, e.g., from a proposed focus, or at least by the optical system of the microscope.

Advantageously, a pre-defined proposed focus can be simply and swiftly provided, with no additional calculations.

An embodiment of the first aspect relates to a computer-implemented method for manual focus adjustment of a microscope, wherein a pre-defined focus is selected from a look-up table.

A look-up table can provide a quick and resource-efficient way to select a proposed focus based on one or more additional parameters. A look-up table can comprise focus levels depending on contrasts, in particular amplitude or phase contrasts. Additionally or alternatively, a look-up table can comprise focus levels, i.e. proposed foci, depending on a condition of the sample, e.g. its material, its geometrical properties, its texture, etc.

An embodiment of the first aspect relates to a computer-implemented method for manual focus adjustment of a microscope, wherein the proposed focus is determined based on a machine learning method.

With the help of machine learning, the method and/or microscope can recognize one or more proposed foci on the basis of existing information and algorithms. Information which can be used for a machine learning method to determine a proposed focus can be geometric information of the sample, e.g. the height and/or thickness of a sample. Additionally or alternatively, a machine learning method can be based on information related to a material quality of the sample, e.g., a material type or texture of the sample. Additionally or alternatively, a machine learning method can be based on one or more optical features of the sample or of a type of samples to which the sample belongs to.

To obtain the kind of information types mentioned above, an embodiment of the method for manual focus adjustment can comprise a step during which this information is obtained, e.g., via a user input or via an automatic detection of one or more of the parameters or parameter types mentioned above. In particular, a method for manual focus adjustment can comprise or have access to a plurality of different machine learning methods and based on the parameters provided a machine learning algorithm can be selected to determine one or more proposed foci.

Advantageously, when based on a machine learning method, one or more proposed foci can be determined based on experience and prior results.

In a further embodiment, a method for manual focus adjustment that used a machine learning method can determine which focal plane the user finally adjusts. This can be done, e.g., based on a time measurement of the adjusted focus. If a user maintains a focus for a longer period, e.g., for more than 30 s or 1 min, it can be inferred that this adjusted focus provided an interesting information about the sample to the user. In this case, the information about the adjusted focus can be used for a training of a proposed focus or at least stored in a database of proposed foci together with additional parameters related to the sample.

An embodiment of the first aspect relates to a computer-implemented method for manual focus adjustment of a microscope, wherein the information about the signal comprises information about at least one of a visual signal, an auditive signal, or a haptic signal.

A visual signal can be presented to a user, e.g., on the same screen on which the user also sees the magnified picture of the sample. Additionally or alternatively, a visual signal can be presented to the user on a separate display, e.g., a small display on the side of the microscope, in particular next to a manual focus knob.

An auditive signal can also come from the microscope or from a device attached to the microscope, such as a loudspeaker.

A haptic signal can come from the device with which the user manually adjusts the focus of the microscope. A haptic signal can be a kinesthetic haptic signal and/or a tactile haptic signal, such as a vibration, e.g., provided by a piezoresistive device.

Advantageously, a feedback modality can be selected that best suits the user. Furthermore, a feedback signal can be used that is already implemented on the microscope.

An embodiment of the first aspect relates to a computer-implemented method for manual focus adjustment of a microscope, wherein the difference comprises at least one of a direction or a magnitude.

A direction comprises information about how to change an adjusted focus to arrive at a proposed focus. In case of a visual signal to the user, the direction can be encoded via the pointing direction of an arrow symbol depicted to the user.

A magnitude comprises the information how far an adjusted focus needs to be adjusted in order to arrive at a proposed focus. In case of a visual signal to the user, the magnitude of a difference can be encoded via the length of an arrow symbol. The longer the arrow symbol, the larger the difference between the adjusted focus and a proposed focus.

Advantageously, based on a direction and/or an amplitude the user can be accurately informed how she/he needs to adjust the actual focus in order to arrive at the proposed focus.

In a further embodiment the information about a user signal can also comprise additional information related to a proposed focus. This can be, e.g., information on illumination. For example, if the user arrives at the proposed focus the microscope or the display can adjust the illumination based on the user signal information such that the structures at the focal plane can be optimally displayed to the user. This additional information can be dependent on the sample and generated by a machine learning algorithm and/or taken from a data base.

An embodiment of the first aspect relates to a computer-implemented method for manual focus adjustment of a microscope, wherein the information about the signal is related to a mechanical focus knob.

A mechanical focus knob is a control mechanism for a user to manually adjust the focus of the microscope. It can comprise a rotating knob or wheel that is connected to a mechanism that moves the camera, lens, or objective in the microscope. Thereby, it changes the adjusted focus of the microscope. When the focus knob is turned by the user, the mechanism moves a lens, an objective, or a camera either towards or away from the sample, allowing the user to adjust the focus until the image is sharp and/or clear. Some focus knobs may also have a coarse focus adjustment and a fine focus adjustment.

In case of a haptic user signal, the haptic actuator, e.g., a piezoresistive actuator or a motor, can be implemented within or next to the mechanical focus knob. In case the mechanical focus knob comprises a coarse tuning and a fine tuning, the information about the signal can be twofold as well and be related to the coarse tuning phase and to the fine-tuning phase.

Advantageously, by relating the signal to a mechanical focus knob, a user can easily change an adjusted focus to a proposed focus based on the perceived user signal on how to change the knob.

An embodiment of the first aspect relates to a computer-implemented method for manual focus adjustment of a microscope, wherein the information about the signal is related to a visual arrow for a screen attached to or part of the microscope or for an eyepiece of the microscope.

An embodiment of the first aspect relates to a computer-implemented method for manual focus adjustment of a microscope, configured to obtain information to activate or to deactivate the signal.

Information on activation or deactivation of the user signal can come, e.g., from the microscope. This information can be obtained and processed in an independent step of the method for manual focus adjustment. For example, if an information about a signal is provided by a method and the user turns off the signal, e.g., by a switch on the microscope, the method for manual focus adjustment can comprise a step to deactivate the signal at the microscope after having received the information to turn off the signal.

Additionally or alternatively, the information for activation and deactivation of the signal can come from a third party. In particular the information can relate to an availability of the features.

Advantageously, the function can be activated if it is helpful and deactivated otherwise. Additionally or alternatively, the function can be activated for payment.

An embodiment of the first aspect relates to a computer-implemented method for manual focus adjustment of a microscope, configured to:
- determine information about one or more additional proposed foci; and
- determine an additional difference relative to the adjusted focus for each of the additional proposed foci.

A sample can have several parts of interest and each of the parts can be located at a different focal plane. In this case, several proposed foci can be determined. Additionally, a plurality of differences can be determined, based on the different proposed foci. Furthermore, for each difference information about a respective signal for the user can be determined and provided. Additionally or alternatively, different proposed foci can be determined based on different parameters and/or different calculation models, e.g. different machine learning methods.

Advantageously, for a complex sample a user can be guided to several interesting focal layers.

An embodiment of the first aspect relates to a computer-implemented method for manual focus adjustment of a microscope, configured to:
- select a difference among the plurality of determined differences; and
- provide information about the signal based on the selected differences.

An embodiment of the first aspect relates to a computer-implemented method for manual focus adjustment of a microscope, configured to provide information about one or more additional signals based on each of the one or more additional proposed foci.

In case of several proposed foci and if a plurality of differences is determined based on the different proposed foci, the information about a signal for the user can comprise information about the parameter(s) on which the signal is based on. For example, a visual arrow can have attached to it information that it directs to the proposed focus with a maximum phase contrast, e.g., by the phrase "maximum phase contrast". Another visual arrow can have attached to it information that it directs to another proposed focus that is located on the optical axis and in the middle of the sample, e.g. by the phrase "center of sample". Additionally or alternatively, the user can select for which proposed focus or foci she/he wants to have guidance.

Advantageously, a most relevant proposed focus or a set of selected foci can be automatically or manually selected and guidance for the selected foci can be provided.

A second aspect relates to a computer-implemented method for manual focus adjustment of a microscope, with the steps:
- obtain information about a manually adjusted focus relative to a sample in a microscope;
- obtain information about a proposed focus for the sample;
- determine a difference between the adjusted focus and the proposed focus;
- assign information about a signal for a user based on the determined difference.

The method is a training method.

In an embodiment the training method can be used to identify one or more proposed foci and store them in a database, e.g., a look-up table, to use them for determining a proposed focus in a method according to the first aspect.

In a further embodiment the training method can be used to train a machine learning algorithm, e.g., a neural network or a transformer model, that can be used to identify a proposed focus in a given situation.

Advantageously, thereby one or more proposed foci can be learned and provided as pre-defined foci, or a machine learning method can be trained in order to provide a proposed focus for a certain situation.

The training method can operate during the normal operation of a microscope, either by being directly executed by the microscope or be interacting with the microscope over an application user interface (API). Additionally or alternatively, the training method can obtain the information on adjusted foci and proposed foci from a database.

A third aspect relates to a microscope with a manually adjustable focus, configured to:
- perform a method according to one of the previous aspects; or
- provide an interface to a computer operating a method according to one of the previous aspects.

The first alternative is related to a microscope with a computer that can execute a method according to the first or second aspect. The computer can be a computer, a system-on-a-chip, an analog electrical circuit, an FPGA, etc.

The second alternative is related to a microscope that is configured to communicate with a computer to execute a method according to the first aspect or second, e.g., over a network. Therefore, the microscope can have an application user interface ("API") to access the hardware components of the microscope, such as a display or a manual focus knob.

Additionally or alternatively, a microscope can have a switch for activating/deactivating the focus guidance according to the first aspect on the microscope.

### Short Description of the Figures

Further advantages and features result from the following embodiments, which refer to the figures. The figures describe the embodiments in principle and not to scale. The dimensions of the various features may be enlarged or reduced, in particular to facilitate an understanding of the described technology. For this purpose, it is shown, partly schematized, in:
Fig. 1 a flowchart of a method according to an embodiment of the disclosure;
Fig. 2 a microscope setup according to an embodiment of the disclosure;
Fig. 3 an architecture of a microscope system according to an embodiment of the disclosure;
Fig. 4 a microscope setup according to an embodiment of the disclosure;
Fig. 5 a schematic illustration of a system according to an embodiment of the disclosure.

In the following descriptions, identical reference signs refer to identical or at least functionally or structurally similar features.

In the following description reference is made to the accompanying figures which form part of the disclosure, and which illustrate specific aspects in which the present disclosure can be understood.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Description of the Figures

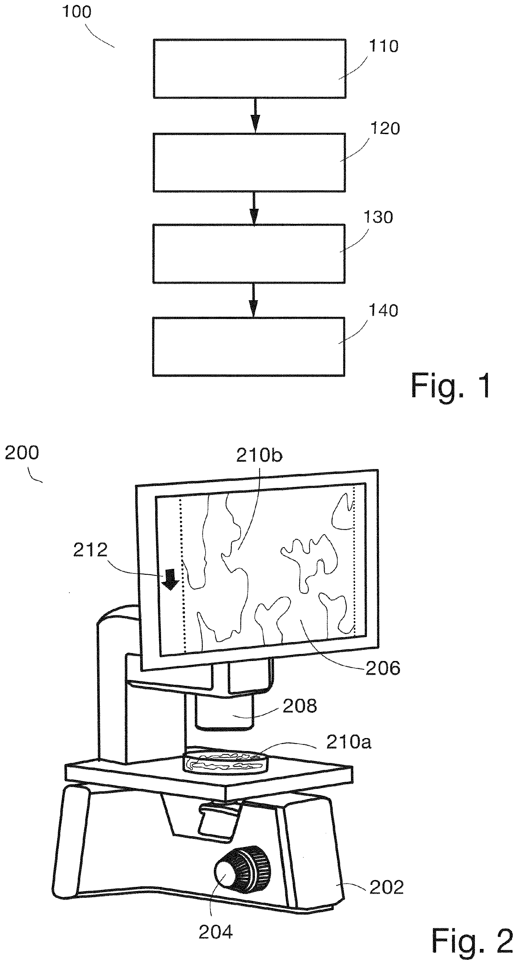

Fig. 1 illustrates a flowchart of an embodiment of a method 100 for manual focus adjustment of a microscope. The method comprises in a first step 110 an obtaining of an information about a manually adjusted focus. The manually adjusted focus is directed to a sample to be analyzed by the microscope.

Furthermore, the method comprises in a step 120 a determining of information about a proposed focus for the sample. After a proposed focus has been determined, in a third step 130, a difference between the adjusted focus and the proposed focus is determined. Based on this difference, in a further step 140, information is provided about a signal to a user based on the determined difference. Based on the information the user-signal can be generated and displayed. In one embodiment the signal generation and/or the display of the signal can be part of the method for manual focus adjustment of the microscope. In an alternative embodiment, the signal generation and/or the signal display can be independent from the method for manual focus adjustment, and e.g., provided by the microscope and/or by a visual display that is attached to the microscope and that receives the information about the user signal.

Fig. 2 shows a microscope setup 200 for operating a method for manual focus adjudgment according to an embodiment of the present disclosure, e.g., according to the embodiment disclosed in Fig. 1. The microscope 202 comprises a manual focus knob 203, an attached screen 206, an integrated camera 208. The sample 210a is provided under the camera 208 such that it be recorded and displayed as an image 210b on the screen 206. The microscope is configured for an adjustable illumination. For example, when analyzing biological samples, adjusting to the right focus without an autofocus system can be tedious and longwinded, especially for inexperienced users. Even if some blurred structures are displayed, the user may not know in which direction and how far to adjust the focus knob in order to arrive at an interesting focus plane. The illustrated embodiment aims at visually guiding the user to quickly focus the sample in order to carry out the application task at hand. This is achieved by adding graphical element 212 the user interface displayed on the system screen 206. This element indicates in what direction the user needs to rotate the manual focus knob and how much adjustment is needed. In the illustrated case, the graphical element, an arrow symbol 212, shows the user that a proposed focus can be found if the user rotates the manual focus knob downwards. The distance to the proposed focal plane is indicated by the length of the arrow symbol 212. Alternatively, this can be shown by a number that decreases towards zero if the focus knob is turned in the direction of the arrow 212. Once the proper focal plan is reached, the arrow size is reduced to a small bar without an arrow or to another symbol, such as a target flag. In case the distance is indicated by a number, the displayed number, when the proposed focus equals the adjusted focus, can be displayed as "0".

In order to display this guidance, a computing unit shall process the images recorded by the camera in such a way that it can derive distance and direction, i.e. positive or negative offset, from the proposed focus position. There are different ways to achieve this. This can either be done by classic algorithms or by machine learning methods, e.g., by a trained (deep) neural network (deep learning) that is used to tell focus offsets from single out-of-focus images in real-time. This allows an update of the graphic element(s) on screen frequently, ideally at least once per second or every time the user turns the focus knob. The higher the update frequency, the more convenient the guided focus adjustment will be for the user. Alternatively, the computing approach could use classical image processing methods for determining the offset and the direction towards a proposed focus.

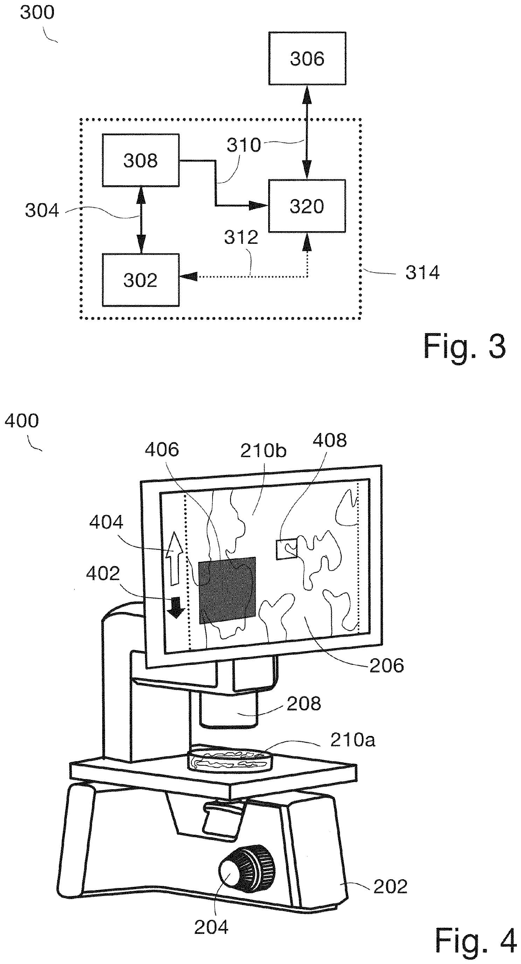

Fig. 3 illustrates an architecture of a setup 300 with a microscope system 314 according to an embodiment of the present disclosure. The microscope system 314 comprises a microscope 302 with a manual focus, a camera 308, and a processing unit 320. Further, the system 314 is connected via a data connection 310 for image signals and user-io-signals with a display and an IO-interface 306, e.g., a computer mouse. Within the system 314, the microscope 302 is connected to the camera 308 over a mechano-optical connection 304. This can be achieved, e.g., if the camera is integrated on the microscope frame, such as depicted, e.g., in Fig. 2. The camera 308 communicates with the processing unit 320 over a data connection 310. The microscope 302 communicates with the processing unit 320 over the hardware control connection 312. Over this connection signals comprising the movement information of the manual focus knob are exchanged. On the forward path, the processing unit can be informed by the microscope if the mechanical focus knob is rotated. On the backward path, the processing unit can reflect user signal information to the microscope. For example, if the user is guided to a proposed focus through a haptic signal, the processing unit can reflect haptic information to the microscope, and the microscope can then control a piezoelectric sensor located in the manual focus knob to display the user rotation direction and/or magnitude of rotation to arrive at the proposed focus. Visual user signals are sent from the processing unit 320 to the display 306 over the data connection 310. The user signal can also be activated or deactivated. This can be done, e.g., via the IO-device 306, e.g., a computer mouse. By the computer mouse 306 a button on the visual user interface on the display 306 can be pushed and thereby the processing unit 320 can be informed to activate or deactivate the user signal. Additionally, the processing unit 320 can communicate the activation or deactivation command to the microscope over the control communication path 312. This can in particular be advantageous to activate or deactivate a haptic effector, e.g., a piezo element in the focus knob, or to activate or deactivate an LED to indicate the status of the function at the microscope itself and not only at the visual user interface on the visual display 306. In case the system provides an auditive user signal for manual focus adjustment, the audio device can also be controlled by the processing unit 320. Additionally or alternatively, the processing unit 320 can store and/or run algorithms and/or data bases, e.g., look-up table(s), to determine a proposed focus based on the adjusted focus, on the type of sample, or based on other parameters.

Fig. 4 illustrates an embodiment similar to the embodiment of Fig. 2. The difference to the embodiment of Fig. 2 lies in the number of user signals that carry the information to proposed foci. In Fig. 2 only a single user signal guides the user to a single proposed focus. In Fig. 4 a system 400 with two focus signals 402, 404 is depicted, wherein the two focus signals guide the user to two different proposed foci. Therefore, the system 400 determines information about two proposed foci. Based on each of the two proposed focal points, the system 400 determines a corresponding difference from the focus currently set by the user. Advantageously, by using a plurality of proposed foci, a user can be guided toward several interesting regions of a sample. The system 400 has determined at least two interesting regions 406, 408 within the sample 210a. These regions were identified as areas of interest, e.g., by a machine learning algorithm that is trained for the specific type of sample that is currently analyzed in the microscope. The machine learning algorithm has further identified that the focal planes at which the two different regions are optimally displayed differ from each other. Hence, the system 400 determines two differences related to two proposed foci. A first difference is determined between the adjusted focus to the proposed focus for the sample region 406. And a second difference is determined from the adjusted focus to the proposed focus for sample region 408. The first difference is visually illustrated by arrow symbol 402. The arrow symbol 402 guides the user to the focal plane determined for the sample region 406. Analogously, the arrow symbol 404 guides the user to the focal plane determined for the sample region 408. Advantageously, the user can decide on her/his own which focal plane she/he wants to visit first. Both proposed foci, for sample region 406 and for sample region 408, are constantly updated. Hence, once the user has arrived at the proposed focus for sample region 406, the arrow symbol 404 has changed correspondingly and the user can follow the remaining arrow to arrive at the proposed focus for sample region 408. Alternatively, the system can select between a plurality of determined proposed foci on its own, e.g., by a machine learning method, and present only the selected proposed focus to the user.

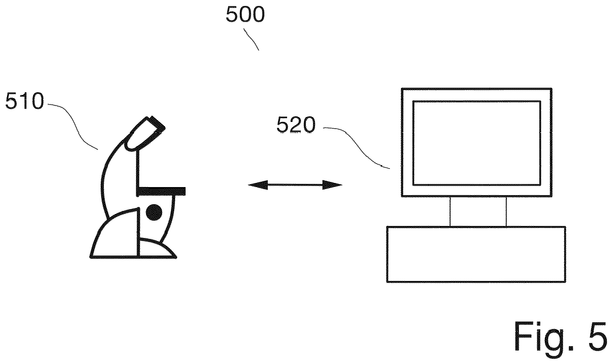

Some embodiments relate to a microscope comprising a system or a method as described in connection with one or more of the Fig. 1 - 4. Alternatively, a microscope may be part of or connected to a system as described in connection with one or more of the Figs. 1 to 4. Fig. 5 shows a schematic illustration of a system 500 configured to execute a method for manual focus adjustment as described herein. The system 500 comprises a microscope 510 and a computer system 520. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

Alternatively, the computer system 520 may be connected to the microscope 510 over a network, e.g., the internet. In this case the microscope 510 and the computer 520 can work together over an application user interface (API), e.g., a RESTful API. The computer 520 runs a method according to an embodiment described herein, e.g., as described in Fig. 1. It obtains information about an adjusted focus, according to step 110, over the network. The computer then determines one or more proposed foci according to step 120 and the associated differences according to step 130. Finally, the computer 520 provides the information about a signal 212 to a user based on the determined difference, according to step 140. This information is also exchanged over the network using the RESTful-API.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: method according to an embodiment of the disclosure
- 110: method step for obtaining information about an adjusted focus
- 120: method step for determining information about a proposed focus
- 130: method step for determining information about a difference between adjusted and proposed focus
- 140: method step for providing a user signal

- 200: microscope setup according to an embodiment of the disclosure
- 202: microscope
- 204: mechanical focus knob
- 206: visual display
- 208: camera
- 210a: sample in sample holder
- 210b: sample as displayed on visual display
- 212: signal for manual focus adjustment

- 300: architecture of a setup according to an embodiment of the disclosure
- 302: microscope
- 304: mechanical arrangement and communication path
- 306: display and/or i/o-device
- 308: camera
- 310: data communication path
- 312: control communication path
- 314: boundary of setup
- 320: processing unit (computer)

- 400: microscope setup according to an embodiment of the disclosure
- 402: first signal for manual focus adjustment
- 404: second signal for manual focus adjustment
- 406: first interesting area of sample
- 408: second interesting area of sample
- 500: system according to an embodiment of the disclosure
- 510: microscope
- 520: computer system

## Claims

1. A computer-implemented method for manual focus adjustment of a microscope, with the steps:
- obtaining information about a manually adjusted focus relative to a sample (210a) in a microscope (202);
- determining information about a proposed focus for the sample (21 0a);
- determining a difference between the adjusted focus and the proposed focus;
- providing information about a signal (212) to a user based on the determined difference.

2. The method according to the preceding claim, wherein the information about the signal (212) is updated:
- constantly; or
- if the manually adjusted focus changes.

3. The method according to one of the preceding claims, wherein the proposed focus is based on the adjusted focus.

4. The method according to one of the preceding claims, wherein the proposed focus is based on a pre-defined focus.

5. The method according to the preceding claim, wherein a pre-defined focus is selected from a look-up table.

6. The method according to one of the preceding claims, wherein the proposed focus is determined based on a machine learning method.

7. The method according to one of the preceding claims, wherein the information about the signal (212) comprises information about at least one of a visual signal, an auditive signal, or a haptic signal.

8. The method according to one of the preceding claims, wherein the difference comprises at least one of a direction or a magnitude.

9. The method according to one of the preceding claims, wherein the information about the signal (212) is related to a mechanical focus knob (204).

10. The method according to one of the preceding claims, wherein the information about the signal (212) is related to a visual arrow (212) for a screen (206) attached to or part of the microscope (202) or for an eyepiece of the microscope (202).

11. The method according to one of the preceding claims, configured to obtain information to activate or to deactivate the signal.

12. The method according to one of the preceding claims, configured to:
- determine information about one or more additional proposed foci; and
- determine an additional difference relative to the adjusted focus for each of the additional proposed foci.

13. The method according to the preceding claim, configured to:
- select a difference among the plurality of determined differences; and
- provide information about the signal (402, 403) based on the selected differences.

14. The method according to one of the two preceding claims, configured to provide information about one or more additional signals (402, 403) based on each of the one or more additional proposed foci.

15. A computer-implemented method for manual focus adjustment of a microscope, with the steps:
- obtain information about a manually adjusted focus relative to a sample (210a) in a microscope (202);
- obtain information about a proposed focus for the sample (210a);
- determine a difference between the adjusted focus and the proposed focus;
- assign information about a signal (212) for a user based on the determined difference.

16. A microscope (202) with a manually adjustable focus (204), configured to:
- perform a method according to one of the previous claims; or
- provide an interface to a computer operating a method according to one of the previous claims.
